Europäisches Patentamt

European Patent Office

Office européen des brevets

(19)

(11) Veröffentlichungsnummer: **0 235 367**
**B1**

(12)

# EUROPÄISCHE PATENTSCHRIFT

(45) Veröffentlichungstag der Patentschrift:
28.02.90

(51) Int. Cl.⁴: **C01B 3/38, B01J 8/06, C01B 3/34**

(21) Anmeldenummer: **86116208.9**

(22) Anmeldetag: **22.11.86**

(54) **Vorrichtung zum Einsetzen in einem Verfahren zur Erzeugung von Produktgas mit Wasserstoff- und Kohlenoxidgehalten.**

(30) Priorität: **22.02.86 DE 3605811**

(43) Veröffentlichungstag der Anmeldung:
**09.09.87 Patentblatt 87/37**

(45) Bekanntmachung des Hinweises auf die Patenterteilung:
**28.02.90 Patentblatt 90/9**

(84) Benannte Vertragsstaaten:
**AT BE CH DE ES FR GB GR IT LI NL SE**

(56) Entgegenhaltungen:
**DE-A- 1 667 247**
**DE-A- 2 412 841**
**DE-A- 3 244 252**
**US-A- 2 986 454**

(73) Patentinhaber: **Uhde GmbH,**
**Friedrich-Uhde-Strasse 15 Postfach 262,**
**D-4600 Dortmund 1(DE)**

(72) Erfinder: **Marsch, Hans-Dieter, Dipl.-Ing.,**
**Overhoffstrasse 193, D-4600 Dortmund 76(DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung richtet sich auf eine Vorrichtung zum Einsatz in einem Verfahren zur Erzeugung von Produktgas mit Wasserstoff-Kohlenoxidgehalten aus einem Einsatzgas, das im wesentlichen Kohlenwasserstoffe enthält, insbesondere aus mit Wasserdampf vernetztem Erdgas, wobei die Vorrichtung eine obere und eine untere über einen Rohrboden getrennte Kammer aufweist mit am Rohrboden gehaltenen, in die untere Kammer weisenden, dort bereichsweise mit Hüllrohren versehenen Reformerrohren.

Eine derartige Vorrichtung ist beispielsweise aus der DE-A 32 44 252 der Anmelderin bekannt. Sie besteht aus einem Behälter, der über einen im oberen Drittel befindlichen Rohrboden in zwei Teile geteilt wird, und zwar in einen größeren Reaktionsraum mit den darin befindlichen Reformerrohren und mit einem im Kopfbereich angeordneten Erdgas-/Dampfraum, von dem aus die Verteilung des Erdgas-/Dampfgemisches auf die Reformerrohre erfolgt.

Innerhalb des Reaktionsraumes sind die Reformerrohre ummantelt. Diese Ummantelung bildet in diesem Raum eine Sammelkammer und führt das Reaktionsprodukt über einen entsprechenden Stutzen aus dem Reaktionsbehälter.

Bei dieser Prozeßführung kommt es nicht zuletzt durch den Einsatz von reinem Sauerstoff, der in die Reaktions- bzw. Mischkammer eingeführt wird, zu einer exothermen Reaktion, die dann das Produktgas mit entstehen läßt. Diese Wärme kann zur Beheizung der Reformerrohre herangezogen werden, was über die Hüllrohre geschieht.

Bei der bekannten Konstruktion ist insbesondere nachteilig, daß der Rohrboden den vergleichsweise hohen Differenzdruck zwischen Reaktionskammer einerseits und der Verteilerkammer für das Einsatzgas andererseits ausgesetzt ist. Dies gilt in gleicher Weise für die sehr unterschiedlichen Temperaturen, die auf der einen Seite des Rohrbodens gegenüber der Temperatur auf der anderen Seite, insbesondere im Sammelraum des Reaktionsgases, herrschen. Die damit verbundenen hohen Belastungen, Dehnungen u. dgl. können zu Schäden am Rohrboden führen. Umgekehrt müssen die Rohrböden dann von solcher Qualität sein, daß sie diesen Belastungen standhalten, was deren wirtschaftliche Herstellung nur schwer möglich macht.

Aufgabe der Erfindung ist daher die Schaffung einer Lösung, mit der die Druck- und Temperaturunterschiede, die den Rohrboden belasten, durch konstruktive Maßnahmen verringert werden, ohne daß die gute Gesamtleistung des Reaktionsgefäßes darunter zu leiden hätte.

Diese Aufgabe wird bei einer Vorrichtung der eingangs bezeichneten Art gemäß der Erfindung dadurch gelöst, daß der Rohrboden als Verteilerkammer für das Einsatzprodukt auf die Reformerrohre ausgebildet ist, wobei der Rohrboden aus zwei ineinander angeordneten, zur Durchflutung mit dem Einsatzprodukt miteinander verbundenen Hohlkörpern ausgebildet ist.

Mit der Erfindung wird erreicht, daß der Erdgas-/ Dampfraum, der ursprünglich im Kopfbereich des Reaktionsgefäßes angeordnet ist und mit seinem Druck und mit seiner Temperatur eine Seite des Dampfbodens beaufschlagt, in den Dampfboden selbst verlegt wird, während dieser Erdgas-Dampfraum nunmehr als Sammelraum für das Produktgas dient mit den dort herrschenden Drücken und Temperaturen.

Durch die Ausbildung des Rohrbodens als Doppelraum mit ineinander angeordneten Kammern kommt es in diesem Bereich bereits zu einer Vergleichmäßigung der Temperaturen und zur Vorwärmung des über diesen Rohrboden strömenden Einsatzproduktes.

In Ausgestaltung sieht die Erfindung vor, daß der innere Holhkörper im wesentlichen konzentrisch zu dem diesen allseitig umgebenden äußeren Hohlkörper angeordnet und mit wenigstens einer Zuführleitung für das Einsatzprodukt ausgerüstet ist.

Durch diese konzentrische Anordnung kann insbesondere erreicht werden, daß die auftretenden Spannungen innerhalb des Rohrbodens aufgrund der Temperatur- und Druckunterschiede sich ausgleichen, da hierzu eine konzentrische Anordnung die besten Möglichkeiten bietet.

Vorteilhaft ist es, wenn die Durchflutungsöffnungen für das Einsatzgas an der Unterseite des inneren Hohlkörpers und die Durchflutungsöffnungen und die vom äußeren Hohlkörper in die Kopfbereiche der Reformerrohre führenden Anschlußrohre an der Oberseite des äußeren Hohlkörpers vorgesehen sind, was wiederum die Vergleichmäßigung der Strömungsverhältnisse und damit die besondere Vergleichmäßigung von Temperaturen, Drücken und Spannungen möglich macht, da der innere Hohlrohrkörper etwa im Prinzip des Gegenstromes umflutet wird.

Grundsätzlich könnten die Reformerrohre in ihren Kopfbereichen direkt mit der äußeren Hohlkammer verbunden sein. Zweckmäßig ist es allerdings hier, wie dies erfindungsgemäß vorgesehen ist, Anschlußrohre vorzusehen, und zwar von der Oberseite des äußeren Hohlkörpers ausgehend.

An dieser Stelle sei bemerkt, daß in diesem Anmeldungstext bei der Beschreibung zwar "oben" und "unten" als Anordnungsangabe der einzelnen Elemente zueinander angegeben ist. Allerdings können die Verhältnisse selbstverständlich anders sein, etwa "oben" und "unten" vertauscht werden, wenn die Vorrichtung auf dem Kopf stehend angeordnet ist oder aber auch in Schräglage u. dgl. mehr, so daß die Bezeichnungen "oben" und "unten" in diesem Falle nur bezugnehmend auf das später beschriebene Ausführungsbeispiel zu werten sind.

In weiterer Ausgestaltung sieht die Erfindung vor, daß jedem Reformerrohr wenigstens ein eigenes Anschlußrohr zugeordnet ist. Selbstverständlich können hier eine Mehrzahl von Anschlußrohren vorgesehen sein. Allerdings hat sich ein Anschlußrohr pro Reformerrohr als durchaus zweckmäßig erwiesen.

Die Erfindung sieht auch vor, daß die die Reformerrohre umgebenden Hüllrohre den Rohrboden unter Freilassung einer Ringöffnung zur oberen Kammer durchsetzen. Diese Gestaltung hat den Vorteil, daß alle Elemente im wesentlichen konzentrisch zueinander montiert werden können, da innerhalb des unteren Reaktionsraumes eine Sammelkammer durch diese besondere Gestaltung und Führung der Hüllrohre entbehrlich ist.

Um weiter einen Ausgleich für Temperatur- und Druckspannungen und -unterschiede zu ermöglichen, ist nach der Erfindung auch vorgesehen, daß der Rohrboden mit einer entsprechenden Anzahl von Rohrhülsen zur Aufnahme der Hüllrohre mit den Reformerrohren ausgerüstet ist.

Grundsätzlich könnten zwar beispielsweise die Hüllrohre direkt in den entsprechenden Elementen des Rohrbodens gasdicht eingeschweißt werden, allerdings hat das Vorsehen an Rohrböden einen besonderen Vorteil, da z.B. die Reformerrohre mit ihren eigenen Hüllrohren z.B. einzeln auswechelbar sind. Sie können z.B. in einen so vorbereiteten Rohrboden eingehängt werden und es bedarf lediglich noch der Verbindung der Reformerrohre über die Anschlußrohre mit dem hohlen Rohrboden.

Um einen Ringspalt zu erzeugen, der den Rohrboden möglichst weit durchsetzt und gleichzeitig die Abdichtung der beiden Kammern, die vom Rohrboden getrennt werden, aufrecht erhält, sieht die Erfindung auch vor, daß die Rohrhülsen einen größeren Innendurchmesser aufweisen als der Außendurchmesser der Hüllrohre beträgt, wobei in der Gebrauchslage die Stirnseitenbereiche der Rohrhülsen und der Hüllrohre gasdicht unter Bildung des zu einer Seite hin offenen Ringspaltes miteinander verbunden sind.

Hierbei ist bei der Erfindung die Anordnung so getroffen, daß der Stirnseitenbereich, der beispielsweise von einer Schweißnaht gebildet wird, zum oberen Sammelraum des Produktgases hinweisend angeordnet ist. Damit wird über den Ringspalt Druck und Temperatur des Reaktionsraumes möglichst weit in den Rohrboden hineingeleitet.

Die Erfindung sieht schließlich auch vor, daß die Reformerrohre sich mit Halteelementen auf dem Verbindungsbereich zwischen den Rohrhülsen und den Hüllrohren abstützen. Dies führt zu einer leichten Montierbarkeit und damit auch Auswechselbarkeit, wie dies weiter oben schon in einer anderen Ausführungsform für das Gesamtsystem erwähnt wurde. So kann bei der Montage ein entsprechend gestalteter Rohrboden mit den Rohrhülsen und den Hüllrohren vorgefertigt werden. Damit müssen nur noch die Reformerrohre nachträglich eingehängt und entsprechend verbunden werden.

Die Erfindung ist nachstehend anhand der Zeichnung beispielsweise näher erläutert. Diese zeigt in

Fig. 1 einen Schnitt durch die Vorrichtung,
Fig. 2 eine vergrößerte Darstellung des Bereiches des Rohrbodens ebenfalls geschnitten sowie in

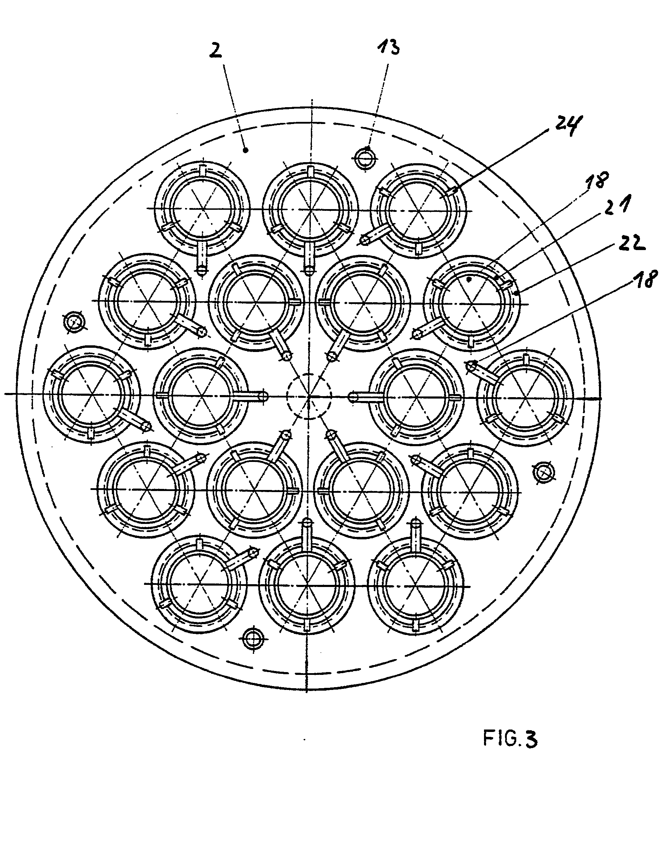

Fig. 3 eine Aufsicht auf den Rohrboden gemäß Pfeil III in Fig. 2.

Die allgemein mit 1 bezeichnete Vorrichtung wird von einem über einen mit 2 bezeichneten Rohrboden in eine obere Kammer 3 und eine untere Kammer 4 geteilten Druckgefäß 5 gebildet. Oben ist das Druckgefäß 5 über eine Flanschwindung 6 mit einem Deckel 7 verschlossen. Alle Wandbereiche sind mit einer Innenisolierung 8 versehen.

Die obere Kammer 3 dient als Sammelkammer für das erzeugte Produktgas, das die Vorrichtung 1 über den einen oberen Rohrstutzen 9 verläßt. Diese Sammelkammer wird im folgenden lediglich mit "Kammer 3" bezeichnet.

Die untere Kammer 4 stellt die Reformerkammer dar, d.h. sie ist mit Rohrstutzen 10 und 10a ausgerüstet, in die z.B. das Erdgas und Sauerstoff oder Luft als Einsatzgase eingeführt werden, was mit den Mehrfachpfeilen bezeichnet sein soll. Diese untere Reformerkammer wird im nachfolgenden "Kammer 4" genannt.

Der über Halteelemente 12 fixierte Rohrboden 2 ist als Verteilerkammer für das Einsatzprodukt ausgebildet und verfügt daher über eine Zuführleitung 13 und einen nach außen führenden Anschlußstutzen 14 zur Beaufschlagung mit dem Einsatzprodukt, was z.B. aus einem Erdgas-Dampfgemisch bestehen kann. Dies ist beim Anschlußstutzen 14 mit einem Pfeil angedeutet.

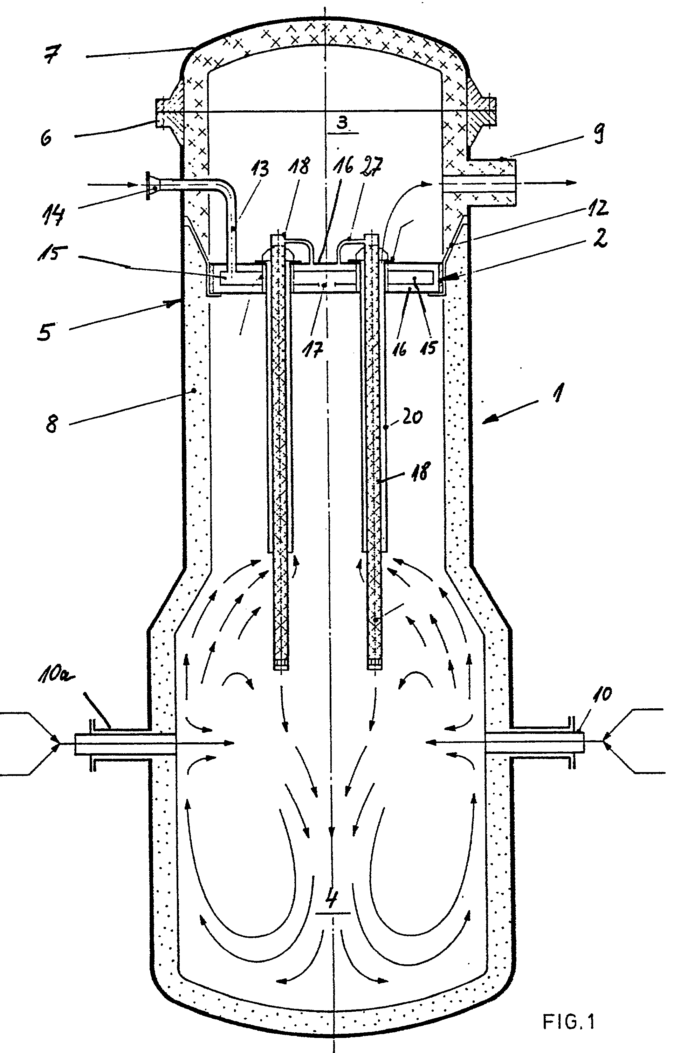

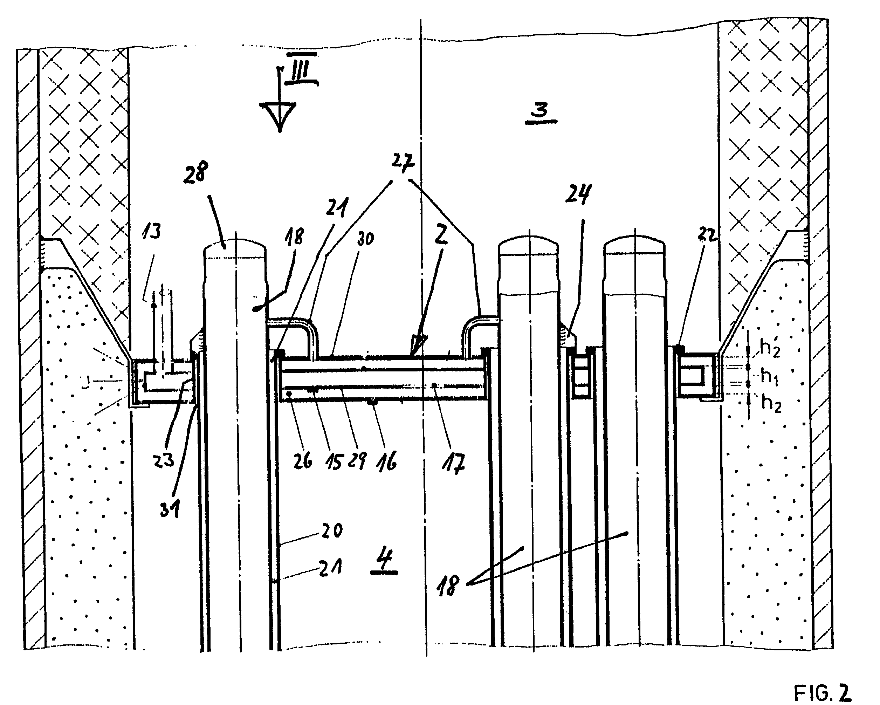

Der Rohrboden 2 weist dabei einen inneren Hohlkörper 15 und einen äußeren Hohlkörper 16 auf, der den inneren Hohlkörper 15 im wesentlichen symmetrisch umgibt. Der innere Hohlkörper 15 ist mit im dargestellten Beispiel nach den Figuren 1 und 2 nach unten weisenden Durchflutungsöffnungen 17 ausgerüstet, der äußere Hohlkörper 16 mit nach oben weisenden Durchflutungsöffnungen zum Anschluß von Anschlußrohren 27. Diese Anschlußrohre führen in die Kopfbereiche 28 von Reformerrohren, die allgemein mit 18 bezeichnet sind, und aus der Kammer 3, in die sie nur ein kleines Stück hineinragen, im wesentlichen in die Kammer 4 führen.

Die Reformerrohre 18 sind von Hüllrohren 20 umgeben, die unter Freilassung eines oben offenen Ringspaltes 21 (Fig. 2) die Reformerrohre 18 umhüllen und somit eine Verbindung zwischen der Kammer 4 und der Kammer 3 schaffen, so daß eine Umströmung und Durchflutung von der Kammer 4 in die Kammer 3 und von dort über den Anschlußstutzen 9 in den weiteren Prozeß möglich ist, was in Fig. 1 mit den kleinen Pfeilen angedeutet ist.

Aus Fig. 2 wird deutlich, daß die Hüllrohre 20 über eine Schweißnaht 22 an Rohrhülsen 23 befestigt sind, die ihrerseits gasdicht im Rohrboden 2 verschweißt sind. Die Schweißnaht 22 weist dabei in Richtung auf die Kammer 3. Die Maße sind dabei so getroffen, daß der Innendurchmesser der Rohrhülsen 23 größer ist als der Außendurchmesser der Hüllrohre 20, so daß ein von der Kammer 4 aus offener bis zur Schweißnaht 22 reichender, oben geschlossener Ring spalt 31 entsteht.

Die Reformerrohre sind mittels Haltestegen 24 auf den Schweißnähten 22 aufgesetzt und dort ggf. dauerhaft verbunden. Sie können allerdings auch lose aufgesetzt sein, wenn die Anordnung, wie dargestellt, hängend getroffen ist, ohne daß die Erfindung hierauf beschränkt wäre.

Der Strömungsverlauf im Rohrboden ist dabei im wesentichen der folgende:

Durch das Anschlußrohr 13 wird das Einsatzgas in die innere Kammer 15 des Rohrbodens 2 geleitet. Von dort strömt es durch eine oder mehrere untere Auslaßöffnungen 17 in den Innenraum 26 der äußeren Kammer 16, von dort über die Anschlußrohre 27 in die Kopfbereiche 28 der Reformerrohre 18. Nach Durchströmen der Reformerrohre 18 mit ihren entsprechenden Füllungen strömt das Gas in den Raum 4, vermischt sich dort mit dem über den Rohrstutzen 10 bzw. 10a einströmenden weiteren Gasen und verläßt die Kammer 4 über den Ringspalt 21, der zwischen den Reformerrohren 18 und den Hüllrohren 20 gebildet ist und strömt von dort in die Kammer 3. Diese Kammer 3 verläßt das Produktgas dann über den Stutzen 9.

In Fig. 2 auf der rechten Seite ist noch das Maß $h_1$ als Höhe der inneren Hohlkammer 15 angegeben. Diese Höhe kann variabel gestaltet sein, während die mit $h_2$ bezeichnete Höhe der äußeren Kammer jeweils gleich sein sollte, um eine Symmetrie zu erreichen bei Aufrechterhaltung einer ausreichend hohen Strömungsgeschwindigkeit und einer entsprechenden gleichmäßigen Kühlung des Rohrbodens.

Natürlich ist das beschriebene Ausführungsbeispiel der Erfindung noch in vielfacher Hinsicht abzuändern, ohne den Grundgedanken zu verlassen. So kann beispielsweise die innere Hohlkammer 15 aus mehreren Elementen bestehen, sie können meanderförmig oder spiralförmig gestaltet, sie kann mit einer spezifischen Strömung erzwingenden Schikanen an ihrer Außenseite und/oder Innenseite ausgerüstet sein u. dgl. mehr.

## Patentansprüche

1. Vorrichtung zum Einsatz in einem Verfahren zur Erzeugung von Produktgas mit Wasserstoff- und Kohlenoxidgehalten aus einem Einsatzgas, das im wesentlichen Kohlenwasserstoffe enthält, insbesondere aus mit Wasserdampf vernetztem Erdgas, wobei die Vorrichtung eine obere und eine untere über einen Rohrboden getrennte Kammer aufweist mit am Rohrboden gehaltenen, in die untere Kammer weisenden, dort bereichsweise mit Hüllrohren versehenen Reformerrohren, dadurch gekennzeichnet, daß der Rohrboden (2) als Verteilerkammer für das Einsatzprodukt auf die Reformerrohre (18) ausgebildet ist, wobei der Rohrboden (2) aus zwei ineinander angeordneten, zur Durchflutung mit dem Einsatzprodukt miteinander verbundenen Hohlkörpern (15,16) gebildet ist.

2. Vorrichtung nach Anspruch 1, dadurch gekennzeichnet, daß der innere Hohlkörper (15) im wesentlichen konzentrisch zu dem diesen allseitig umgebenden äußeren Hohlkörper (16) angeordnet und mit wenigstens einer Zuführleitung (13) für das Einsatzprodukt ausgerüstet ist.

3. Vorrichtung nach Anspruch 1 oder 2, dadurch gekennzeichnet, daß Durchflutungsöffnungen (17) für das Einsatzgas an der Unterseite (29) des inneren Hohlkörpers (15) und daß Durchflutungsöffnungen und die vom äußeren Hohlkörper (16) in die Kopfbereiche (28) der Reformerrohre (18) führende Anschlußrohre (27) an der Oberseite (30) des äußeren Hohlkörpers (16) vorgesehen sind.

4. Vorrichtung nach Anspruch 3, dadurch gekennzeichnet, daß jedem Reformerrohr (18) wenigstens ein eigenes Anschlußrohr (27) zugeordnet ist.

5. Vorrichtung nach einem der vorangehenden Ansprüche, dadurch gekennzeichnet, daß die die Reformerrohre (18) umgebenden Hüllrohre (20) den Rohrboden (2) unter Freilassung einer Ringöffnung (21) zur oberen Kammer (3) durchsetzen.

6. Vorrichtung nach Anspruch 1 oder einem der folgenden, dadurch gekennzeichnet, daß der Rohrboden (2) mit einer entsprechenden Anzahl von Rohrhülsen (23) zur Aufnahme der Hüllrohre (20) mit den Reformerrohren (18) ausgerüstet ist.

7. Vorrichtung nach Anspruch 6, dadurch gekennzeichnet, daß die Rohrhülsen (23) zur Bildung eines Ringspaltes (31) einen größern Innendurchmesser aufweisen als der Außen durchmesser der Hüllrohre (20), wobei in der Gebrauchslage ein Stirnseitenbereich (22) der Rohrhülsen (23) und der Hüllrohre (20) gasdicht unter Bildung des zu einer Seite hin offenen Ringspaltes (31) miteinander verbunden sind.

8. Vorrichtung nach einem der vorangehenden Ansprüche, dadurch gekennzeichnet, daß die Reformerrohre (18) sich mit Halteelementen (24) auf dem Verbindungsbereich (22) zwischen den Rohrhülsen (23) und den Hüllrohren (20) abstützen.

## Claims

1. Apparatus for use in a process for generating product gas with hydrogen and carbon dioxide content from a starting gas, which substantially comprises hydrocarbons, in particular from natural gas permeated with water vapour, the apparatus comprising an upper and a lower chamber separated via a tube base, with reformer tubes held on the tube base, projecting into the lower chamber, and provided in places with casing tubes, characterised in that the tube base (2) is formed as a distributor chamber for the starting porduct to the reformer tubes (18), the tube base (2) consisting of two hollow bodies (15, 16) connected together and inserted one inside another for the starting product to flow through.

2. Apparatus according to claim 1, characterised in that the inner hollow body (15) is arraged substantially concentrically with the outer casing body (16) surrounding it on all sides, and is equipped with at least one supply line (13) for the starting product.

3. Apparatus according to claim 1 or 2, characterised in that the flow apertures (17) for the starting gas are provided on the under-side (29) of the inner hollow body (15) and in that flow apertures and the connecting tubes (27) leading from the outer hollow body (16) to the top region (28) of the reformer tubes (18) are provieded on the upper side (30) of the outer hollow body (16).

4. Apparatus according to claim 3, characterised in that each reformer tube (18) is associated with at least one separate connecting tube (27).

5. Apparatus according to one of the preceding claims, characterised in that the casing tubes (20) surrounding the reformer tubes (18) penetrate the tube base (2), leaving an annular aperture (21) to the upper chamber (3).

6. Apparatus according to claim 1 or one of the following claims, characterised in that the tube base (2) is equipped with an appropriate number of tube sleeves (23) for receiving the casing tubes (20) with the reformer tubes (18).

7. Apparatus according to claim 6, characterised in that the tube sleeves (23) have a larger inner diameter than the outer diameter of the casing tubes (20) in order to form an annular gap (31), and in the operating position an end face region (22) of the tube sleeves (23) and of the casing tubes (20) are connected together in a sealing-tight manner, forming the annular gap (31) which is open to one side.

8. Apparatus according to one of the preceding claims, characterised in that the reformer tubes (18) comprise holding elements (24) which bear against the connecting region (22) between the tube sleeves (23) and the casing tubes (20).

**Revendications**

1. Appareil destiné à l'utilisation dans un procédé de production de gaz de synthèse à teneurs en hydrogène et en oxyde de carbone, à partir d'un gaz de charge qui renferme pour l'essentiel des hydrocarbures, notamment à partir de gaz naturel réticulé avec de la vapeur d'eau, l'appareil comprenant des chambres supérieure et inférieure séparées par l'intermédiaire d'un fond tubulaire, avec des tubes de reformage qui sont retenus sur le fond tubulaire et s'engagent dans la chambre inférieure dans laquelle ils sont pourvus, par zones, de tubes d'enveloppement, caracatérisé par le fait que le fond tubulaire (2) est réalisé sous la frome d'une chambre répartitrice du produit de charge parmi les tubes de reformage (18), le fond tubulaire (2) se composant de deux corps creux (15, 16) qui sont disposés l'un dans l'autre, et sont reliés l'un à l'autre en vue d'être traversés par le produit de charge.

2. Appareil selon la revendication 1, caractérisé par le fait que le corps creux interne (15) est disposé, pour l'essentiel, concentriquement au corps creux externe (16) qui l'entoure de toutes parts, et est équipé d'au moins une conduite (13) d'arrivée du produit de charge.

3. Appareil selon la revendication 1 ou 2, caractérisé par le fait que des orifices (17) de circulation traversante du gaz de charge sont prévus à la face inférieure (29) du corps creux interne (15); et par le fait que des orifices de circulation traversante, ainsi que les tubes de raccordement (27) partant du coprs creux externe (16) et gagnant les zones frontales (28) des tubes de reformage (18), sont prévus à la face supérieure (30) du corps creux externe (16).

4. Appareil selon la revendication 3, caractérisé par le fait qu'au moins un propre tube de raccordement (27) est associé à chaque tube reformage (18).

5. Appareil selon l'une des revendications précédentes, caractérisé par le fait que les tubes d'enveloppement (20) entourant les tubes de reformage (18) traversent le fond tubulaire (2), en réservant un orifice annulaire (21) vers la chambre supérieure (3).

6. Apparei selon la revendication 1 ou l'un des suivantes, caracatérisé par le fait que le fond tubulaire (2) est muni d'un nombre correspondant de douilles tubulaires (23), afin de recevoir les tubes d'enveloppement (20) avec les tubes de reformage (18).

7. Appareil selon la revendication 6, caractérisé par le fait que, en vue de former un interstice annulaire (31), les douilles tubulaires (23) présentent un diamètre interne plus grand que le diamètre externe des tubes d'enveloppement (20), les zones (22) des faces frontales des douilles tubulaires (23) et des tubes d'enveloppement (20) étant reliées les unes aux autres dans la position d'utilistion, avec étanchéité aux gaz, en formant l'interstice annulaire (31) ouvert en direction d'un côté.

8. Appareil selon l'une des revendications précédentes, caractérisé par le fait que les tubes de reformage (18) prennent appui, par des éléments de retenue (24), sur la zone de solidarisation (22) entre les douilles tubulaires (23) et les tubes d'enveloppement (20).

FIG.1

EP 0 235 367 B1

FIG. 2

FIG.3